# EUROPEAN PATENT APPLICATION

(11) **EP 1 205 671 A1**
(43) Date of publication of application: **15.05.2002**
(21) Application number: 00124692.5
(22) Date of filing: 11.11.2000
(51) Int. Cl.: F16B 7/18, E04C 5/16

(54) **Self-locking coupling structure**

(71) Applicant: Plooksawasdi, Suntisuk, Dr., Bangkok 10250 (TH)
(72) Inventor: Plooksawasdi, Suntisuk, Dr., Bangkok 10250 (TH)
(74) Representative: Jönsson, Hans-Peter, Dr.Dipl.-Chem.

(57) **Abstract**

The present invention related to connecting two reinforced steel bars (14) of the same or different sizes which are placed end to end. The connector requires bars having the same diameters to be hot rolled with an identical rib patterns (15,16) on each bar (14). The connector (2), while gripped on each of the opposed bars with end nuts, has specially designed grooves (6,7) to fit on rib patterns of the bars and creates an interlocking force between the connector (2) and the bars (14). Thread bars are good example of the hot rolled bars with identical rib patterns described in this invention. The thread bars can use this connector as an alternative to internally thread couplers generally used with the bars.

## Description

### Field of the invention

The present invention relates, in general, to steel bars and coupling devices used to connect adjacent ends of a pair of reinforced concrete steel bars of the same or different sizes. The invention pertains to the improvement of connecting device mechanism between connectors and reinforced bars and more particularly to yield more economic cost of reinforced bar connections. Another application of the invention will be an alternative approach to connect a pair of thread bars.

### Background of the invention

Reinforced steel bars are produced from hot rolled process. The bars are called round bars when they are produced in circular cross sections and called deformed bars when they are rolled into round bars with rib patterns on their longitudinal surfaces. The rib patterns are designed to increase development bond between the bars and surrounding material such as concrete. Their designed rib patterns are governed by codes of practice of each country. The rib patterns of bars, in
general, consist of two or more series of parallel transverse ribs with either the same angle of inclination or contrary angle to each other as shown in figure 3. More over the transverse ribs in each of the series shall have a substantially uniform spacing.

During hot rolled production process, rib patterns are formed on the last roller set. Transverse ribs, on each of the series, are usually formed by the rollers' rib patterns and the rollers are rolled independently to each other. In other words, even through the transverse ribs within each of the series have defined angle and spacing, the transverse rib series (rolled onto each side surrounding a bar) are randomly arranged relatively to each other. Thus the deformed bars, although they have the same rib patterns, produced from different production batches are not identical in terms of transverse rib series alignment.

Reinforced bar connections between any two adjacent bars can be divided into 3 categories as follows
1) Overlapping of the two connecting bars for an appropriate distance so that there will be adequate force transfer from one bar to another through concrete surrounding them.
2) Lap welding of the two connecting bars, in this case lapping distance is shorter than case 1 since the bars can transfer force directly through the weld.
3) Mechanical connections include in the following US patents review :-
   Rothchild (US patent 4,033,502) disclosed an exothermically molten compound that
      contained two connecting bars in their cylindrical chamber. Similar work by Grande (US patent 4,076,163) employed a thermite-type mixture in lieu of the molten compound. Heasman (US patent 4,114,344) used a split-sleeve type clamp with contraction means for firmly closing it around two engaged end portions of bars. In US patent 4,143,986 by Antosh, a pair of hollow steel tubes were compressed to deformed to deformation shape at connecting part of bars. Having a spiral deformation on outer surface of the tube, a single connector with inner spiral deformation matched to those of the tubes was used to splice the bars. Edwards (US patent 4,241,490) introduced particles having a hardness greater than that of bars and a metal sleeve. Upon sleeve compression the particles on the bar surfaces will bite into and grip both the bars and the sleeve. An annealed split pipe disclosed by Andrus (US patent 4,469,465) was used to hold two splicing deformed bars. Welded nuts on the split pipe longitudinal edges were tightened together by bolts and created deformations on the annealed pipe which in turn secured the two bars. Lancelot III used a threaded receiver barrel, forged out of a bar end, to splice to another threaded bar in his US patent 4,619,096.Yee (US patent 4,627,212) and Hope (US patent 4,666,326) disclosed cylindrical connecting sleeves with different grouting materials.

Young (US patent 5,046,878) invented a sleeve with adjustable engagers threaded
through wall of the sleeve to bite into bars. A longitudinal profiled rib was also inserted between the internal sleeve cavity and the bars to increase mechanical coupling strength. US patent 5,067,844 by Bowmer connected two tapered, external threaded, bars by an internally cylindrical threaded sleeve. Lancelot (US patent 5,152,118) and Bernard (US patent 5,158,527) enlarged bars before being threaded. The bars were both connected by threaded sleeves. Bowmer (US patent 5,411,347) disclosed a similar method to those of Lancelot and Bernard with a modified threaded sleeve. Wu
in his US patent 5,193,932 employed an internally threaded slit sleeve to couple two threaded bars. Another two clamping collars were pushed onto two ends of the sleeve to tightly clamp the bars. Albribo (US patent 5,468,524) used an axially elongated chamber with internal threads to secure a threaded bar on one end and openly received bar on another end. The chamber was later fill with concrete. A series of longitudinal spaced holes on a tubular, specially shaped, metal body was introduced by Holdsworth in his US patent 5,664,902. Screws were used to tighten bars. Dahl (US patent 5,669,196) welded an eyelet to an end of each bar and thereafter bolted them to a pair of steel coupler plates.

### Objectives of the invention

It is one of the primary objects of this present invention to provide means to improve connecting method of reinforced concrete steel bars.

Another object of the present invention is to simplify reinforced bars connecting method, so that a common field operator with simple cutting tools and wrenches can perform the task.

Still another object of the present invention is to reduce connecting cost of reinforced bars by eliminating advanced preparation schedule such as bar threading.

Yet another object of the present invention is to provide short operation process on connecting of bars .

And another object of the present invention is to provide a simple method to connect any two bars in unforeseen situation on construction site.

### SUMMARY OF THE INVENTION

The present invention provides a connector for connecting two reinforced steel bars of the
type which are produced with standard deformation patterns, the connector being for connecting the bars end to end and comprising a gripping means which has at least one tightening means. the gripping means comprising at least a pair of grips which assemble into a hollow tube having at least two longitudinal gaps, inner circumferential surfaces of the gripping means being shaped to substantially match the profile of the circumferential surfaces of the bars and also having indented groves to substantially match the deformation patterns of the bars, whereby when the gripping means is closed on the bars, the inner circumferential surfaces of the bars, and the deformation patterns of the bars will sit inside the indented grooves of the gripping means, wherein the outer surface of the gripping means comprises at least one tapered, threaded, circular end which is engageable with a tightening nut, the inner surface of the tightening nut being tapered and threaded to match the outer surface of the gripping means whereby when the tightening nut is turned to tighten the gripping means, the tapered end of the gripping means will move towards the smaller circumferential part of the tightening nut thereby closing together the longitudinal gaps between the grips, whereby the grips are forced to contact tightly the circumferential surfaces of the bars.

The present invention further provides two reinforced steel bars connected end to end using the connector according to the invention.

The present invention further provides a hot rolling process to produce reinforced steel bars with standard deformation patterns, the bars being connectable using the connector according to the invention.

The present invention further provides a method of connecting two reinforced steel bars of the type which are produced with standard deformation patterns using the connector according to the invention.

The present invention further provides a connector for connecting a reinforced steel bars of the type which are produced with standard deformation patterns to an object, the connector comprising a gripping means which has at least one tightening means, the gripping means comprising at least a pair of grips which assemble into a hollow tube having at least two longitudinal gaps, inner circumferential surfaces of the gripping means being shaped to substantially match the profile of the circumferential surfaces of the bars and also having indented groves to substantially match the deformation patterns of the bars, whereby when the gripping means is closed on the bar, the inner circumferential surfaces of the gripping means will contact the circumferential surface of the bar, and the deformation pattern of the bar will fit inside the indented grooves of the gripping means, wherein the outer surface of the gripping means comprises at least one tapered, threaded, circular end which is engageable with a tightening nut, the inner surface of the tightening nut being tapered and threaded to match the outer surface of the gripping means whereby when the tightening nut is turned to tighten the gripping means, the tapered end of the gripping means will move towards the smaller circumferential part of the tightening nut thereby closing together the longitudinal gaps between the grips, whereby the grips are forced to contact tightly the circumferential surfaces of the bars.

The present invention further provides a connector for connecting two reinforced steel bars of the type which are produced with standard deformation patterns, the connector being for connecting the bars end to end and comprising a gripping means which has at least one tightening means. the gripping means comprising at least a pair of grips which assemble into a hollow tube having at least two longitudinal gaps, the inner circumferential surfaces of the gripping means defining a space which is larger than the cross section of connecting bars, the inner circumferential surfaces of the grips comprising a plurality of parallel grooved surfaces, the gripping means further comprising at least a pair of slit collars which shaped like hollow tubes having at least a longitudinal gap on each collar, the outer surfaces of the slit collars having a plurality of parallel grooves which match the multiple parallel grooves of the inner circumferential surfaces of the gripping means, the inner circumferential surfaces of the slit collars having indented grooves to match the deformation patterns of the bars, the slit collars being dimensioned to fit in the gaps between the inner circumferential surfaces of the gripping means and the bars, whereby the bars connected end to end can be rotated axially relative to one another, the inner circumferential surfaces of the slit collars being rotated to match the positions of the deformation patterns of the respective connecting bars, the outer surface of the gripping means comprising at least one tapered, threaded, circular end which is engageable with a tightening nut, the inner surface of the tightening nut being tapered and threaded to match the outer surface of the gripping means whereby when the tightening nut is turned to tighten the gripping means, the tapered end of the gripping means will move towards the smaller circumferential part of the tightening nut thereby closing together the longitudinal gaps between the grips, whereby the grips are forced to contact the slit collars and the slit collars are forced to contact tightly the circumferential surfaces of the bars.

The connector of the present invention is suitable for connecting reinforced steel bars of the type which are produced with standard or fixed deformation patterns generally called rib patterns. The connector employs a gripping means or grip set as described above. In use, inner circumferential surfaces of the gripping means or grip set fit flatly or contact closely the circumferential surfaces of the bars.

### Brief description of the drawings

The invention is herein described, made for exemplary only, and non limiting purposes, in reference to the attached drawings, wherein:
Fig. 1 shows a schematic drawing of the invention.
Fig. 2 shows inner circumferential surfaces of a piece of grip and a piece of nut.
Fig. 3 shows schematic diagram of bars' rib patterns in general.

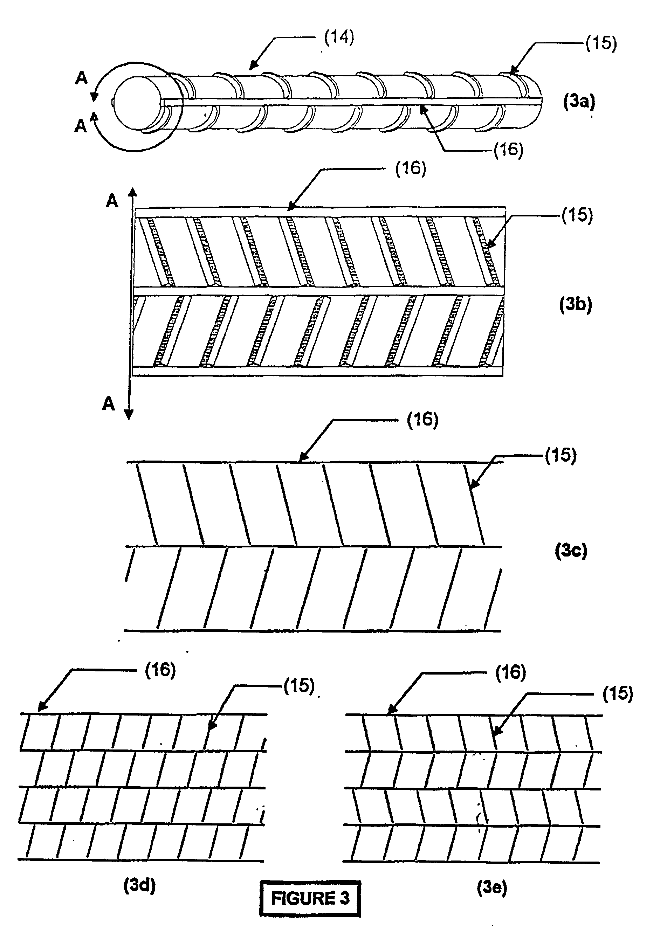

Fig. 4 shows a thread bar and its rib pattern schematic diagram.
Fig. 5 shows two self coupling bars before connection.
Fig. 6 shows the two bars placed on the grip.
Fig. 7 shows a complete connecting bars.
Fig. 8 shows half connector type of the invention used for concrete formed work.
Fig. 9 shows two self coupling bars rotate in different angles.
Fig. 10 shows a modified self coupling connector for bars with limited rotational angles.
Fig. 11 shows the connecting bars with slit collars.
Fig. 12 shows the bars placed in a piece of modified grip.
Fig. 13 shows a complete connecting bars in the modified self coupling connector.

### Detailed description of the preferred embodiments.

Label 14 in figure 3 shows an ordinary reinforced bar with label 15 showing its transverse ribs and label 16 showing its longitudinal rib. Width and height of these ribs are governed by regional codes of practice. Arrow A-A runs around the circular surface of the bar (Figure 3a).

When arrow A-A is spread on a flat surface (Figure 3b) and one imagines that its rib pattern related to the arrow can be laid flat. The rib pattern on the entire surface of the bar in Figure (3a) can be seen as one-side picture in figure (3b) with the same notations. Figure (3c) simplifies the rib pattern in Figure (3b) schematically of which transverse ribs are shown as cross parallel lines (15) and longitudinal ribs are shown by longitudinal lines (16). In this figure it is obvious that the bar shown has two transverse rib series. Another two schematic pictures of four transverse rib series are also shown in Figure 3 with a parallel transverse rib type noted as (3d) and so called fish bone transverse rib type denoted as (3e).

Figure (4a) shows a hot rolled thread bar which is different from an ordinary reinforced bar in its transverse ribs arrangement. In the figure, individual ribs are arranged in parallel. At the same time, the transverse rib series are aligned so that a nut or couple with matching rib spacing and rib thickness can be rotated all the way through the bar. Rib pattern series can be arranged into three or more sets depending upon manufacturers. Note that the thread bars are preferably rolled without longitudinal rib patterns to insure smooth rotating of nuts. Figure (4b) shows schematic rib pattern of the thread bar.

To connect two ordinary reinforced bars (14) with a couple that will be mentioned later required an unusual production process. This invention requires the rib patterns on any reinforced bar of the same bar diameter produced from different batches to be hot rolled identically. In other words, it requires bars to be connected by this invention to have replica rib patterns comparable to each other. This requirement can be achieved by adjusting the technique used, on the last rollers' rib patterns, during hot rolling process. The above mentioned rib patterns of bars is a key to fulfill a part of this invention.

The bars with such mentioned rib pattern will be called self coupling bars in articles following. Connection of these bars requires a special design which will later be called connector. Shape of the connector in Figure (1a) is the purest geometrical embodiment of the invention for any given sizes of bar connections. It consists of three major parts. First part is a grip set as shown in figure (1b), Second and third parts are left and right nuts as can be seen in figure (1d) and (1f) respectively.

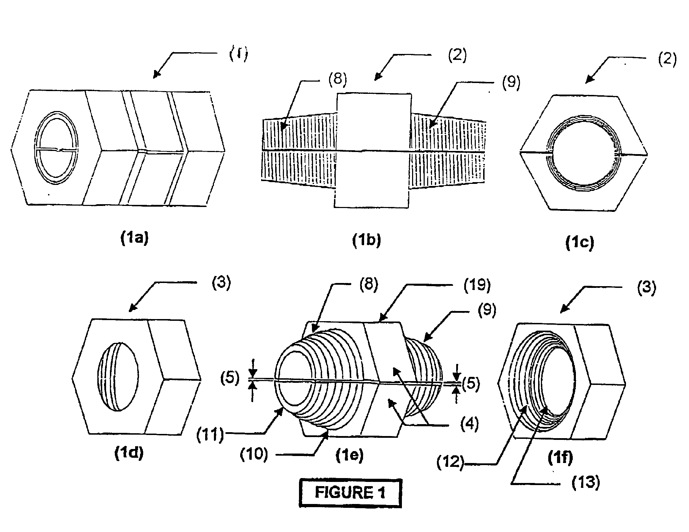

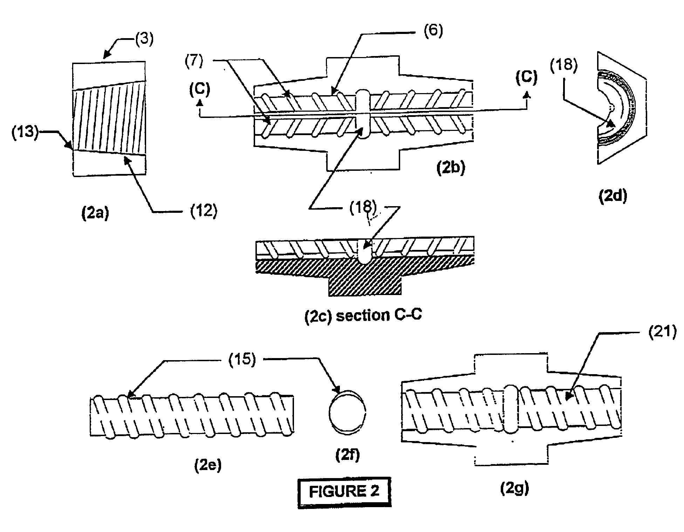

The grip set, as drawn from three different views in figure 1b, 1c and 1e, is similar to a tube that is cut longitudinally into at least two pieces or more. Inside diameter of the tube or grip set will have the same size as the self coupling bars they are supposed to connect. The combined grips or grip set have longitudinal gaps (5) between them. These gaps keep inside diameter of the grip set in similar profile of the bar surfaces. According to this invention, the self coupling bars will be produced with a fixed or an identical rib pattern. Thus it is possible to produce the grip set with a negative replica of the bars' rib pattern. In other words, inner surface of the grips will have indentations of female rib pattern to sit over every lug of the bars. Figure (2b) shows a piece of grip set with the female rib pattern with its longitudinal cross section (Figure 2c) and its end view (figure 2d). At the ends of regular connecting, self coupling bars are usually far from perfectly squared. Special indents (18) are designed to accommodate the imperfectly squared ends of the connecting bars.

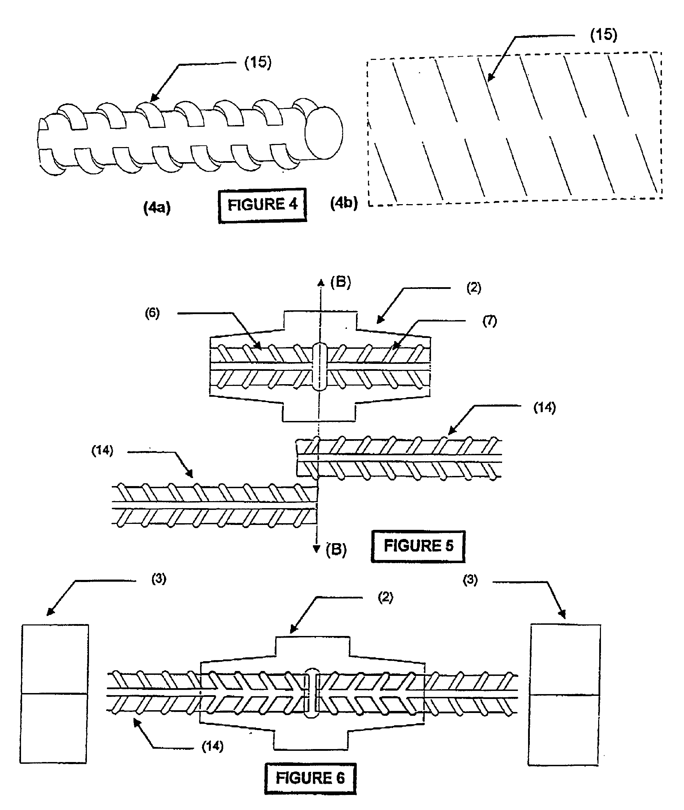

The external shape of the grip set in figure (1e) consists of three portions. The middle portion (19) can .be either cylindrical or hexagonal shape. The two sides (8 and 9) are cylindrical with slightly tapered surface towards the ends. In the figure, the end circle (11) will be smaller than the inside one (10). The surfaces of the cylindrical parts (8 and 9) are threaded to accommodate nuts (3) on each end. The nuts are hexagonal and are threaded on the inner surfaces (12) slightly tapered as shown in Figure 1. With these tapers, when the nuts are tighten, the grip set will be forced to close the gaps (5) between them. During grips closing, the inner profile of the grips will be seated flatly on the surface of the bars, while the bars' ribs and grips' rib indents will also seated on each other and create interlocking mechanism required in bar connection. Figure 2b and 2c show inner surface of a piece of grip set and cross section of a nut (3) in figure 2a. For a thread bar, with side view (2e) and end view (2f) in figure 2, rib pattern textures (21) on each bar are already identical. The inner texture of the grip can be designed to duplicate their thread ribs (15) and its picture is shown in figure (2f). Since the ends of the self coupling bars (from factory) may not necessarily be cut at the correct location to fit exactly with that of the grip set, the ends of each bar may have to be trimmed (see figure 5, arrow B-B). Therefore the rib pattern of the connecting bars, when they are placed on their adjacent ends, are matched with the female rib pattern of the grip set. Upon connecting the bars, both adjacent ends of the bars will be placed equally on the longitudinal length of the grip set as shown in figure 6. When the grip set is tightened, the longitudinal gaps between the grips will be closed, then the individual grips will sit firmly on the bars. Figure 7 shows side view of the two bars after the connection. This invention requires movement of nuts to tighten the connection and will give easy method for workers to connect any two bars.

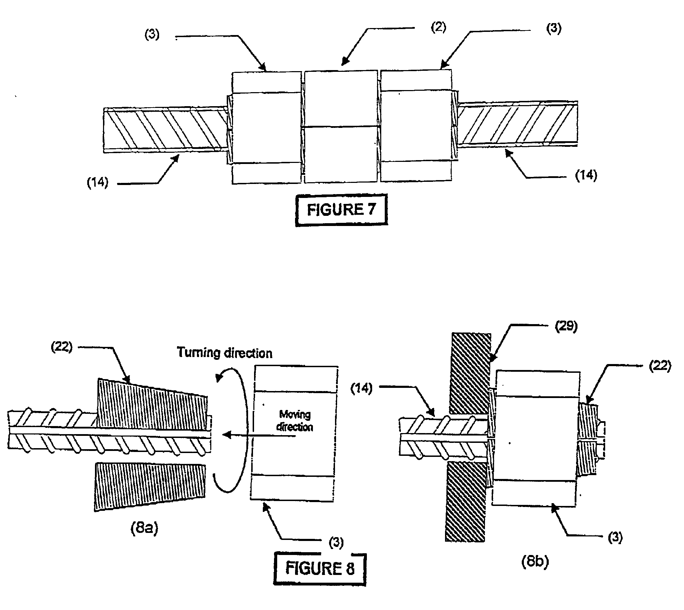

In some situations, there are requirements to lock a reinforced bar against a static surface such as a concrete formed work (29). Half connector (22) or grip lock-nut (in figure 8) can be applied in this case with the same principle of this invention as can be seen in the figures (8a and 8b).

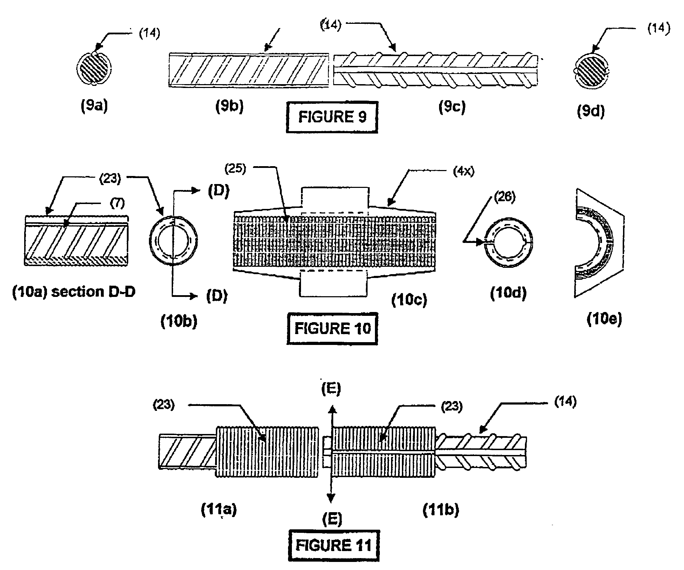

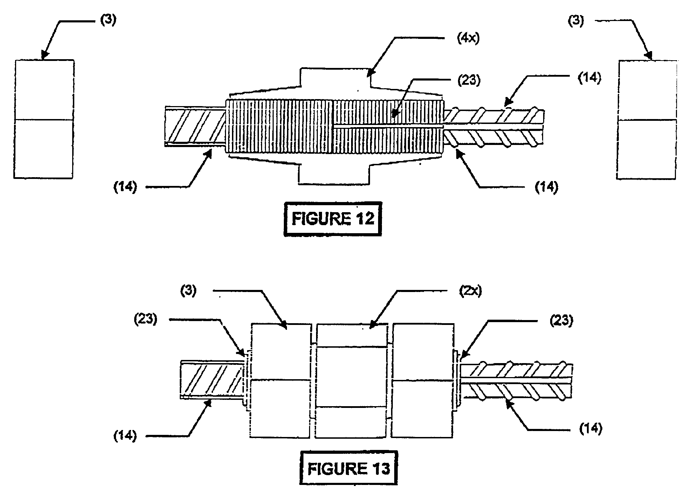

There are situations when two self coupling bars, to be connected, are placed in the same straight line but their rib patterns are axially rotated and fixed in different angles, as can be seen in figure 9 (9b and 9c). Figure (10) illustrates a modification of the bar connector for connecting two bars that have said limited rotational angles. The figure shows a piece of grips (4x) that has the same configuration of the previous one (figure 1b and 1e) with two exceptions. Firstly it's inner diameter of the grip set is larger than bars' diameter and secondly, the inner circumferential texture of the grips' surfaces consists of multiple parallel grooved rings (25) instead of rib pattern grooves. Figure 10e shows end view of the grip. Gaps between these enlarged inner grips' circumference and connecting bars' circumference will be filled with slit collars (23) which are dimensioned to fit the gap as seen in figure (10b and 10d). Said slit collars have tubular shape with a longitudinal slit (26) on one side. Texture of outer surface of the slit collar is shaped as multiple parallel embossed rings to match with those grooved rings of the grip. Inner circumferential surface of the slit collar (figure 10 a, section D-D) has indented grooves (7) and its curvature to match both the deformation patterns and the curvature of the connecting bars respectively. The slit collars are preferable made of a soft metallic material such as annealed low carbon steel for two reasons. First reason, opening and closing of the longitudinal slit for the purpose of wearing the collars onto the bars can be easily done and second reason, soft metal can absorb certain degrees of dimensional tolerances of the connecting bars that may be incurred during production process. Steps of connecting the bars will start with wearing at least one collar onto the end of each bar. All the slit collars are rotated to match with rib patterns of the connecting bars as seen in figure 11. Mechanical press may be required to force the collars to sit tightly on the bars. Part of bars beyond the collars (line E-E) will be cut to keep close the two ends of the bars. The figure shows one left and one right slit collars (23) placed on the connecting bars. Figure 12 shows all collars in their positions with a grip (2x) on the bottom. When the complete set of grips and end nuts (3) are tighten, the configuration will be similar to the previous connection as can be seen in figure 13.

## Claims

1. A connector for connecting two reinforced steel bars of the type which are produced
with standard deformation patterns, the connector being for connecting the bars end to end
and comprising a gripping means which has at least one tightening means, the gripping means comprising at least a pair of grips which assemble into a hollow tube having at least two longitudinal gaps, inner circumferential surfaces of the gripping means being shaped to substantially match the profile of the circumferential surfaces of the bars and also having indented groves to substantially match the deformation patterns of the bars, whereby when the gripping means is closed on the bars, the inner circumferential surfaces of the gripping means will contact the circumferential surface of the bars, and the deformation patterns of the bars will sit inside the indented grooves of the gripping means, wherein the outer surface of the gripping means comprises at least one tapered, threaded, circular end which is engageable with a tightening nut, the inner surface of the tightening nut being tapered and threaded to match the outer surface of the gripping means whereby when the tightening nut is turned to tighten the gripping means, the tapered end of the gripping means will move towards the smaller circumferential part of the tightening nut thereby closing together the longitudinal gaps between the grips, whereby the grips are forced to contact tightly the circumferential surfaces of the bars.

2. A connector according to claim 1, wherein the grips form a hollow cylindrical tube when
assembled.

3. A connector according claim 1 or 2, wherein when the gripping means is in position, the longitudinal gaps are closed or almost closed.

4. A connector according to any of claims 1 to 3, wherein the outer surface of the
Gripping means comprises at least two tapered, threaded, circular ends which are engageable with at least two tightening nuts, the inner surfaces of the tightening nuts being tapered and threaded to match the outer surfaces of the gripping means whereby when the tightening nuts are turned to tighten the gripping means, the tapered ends of each gripping means will move towards the smaller circumferential part of the tightening nuts.

5. Two reinforced steel bars connected end to end using the connector according to any
of claims 1 to 4.

6. Two reinforced steel bars according to claims 5, wherein the bars are opposed thread bars.

7. A hot rolling process for producing reinforced steel bars with standard
deformation patterns on different batches of rolling production, for connection end to end using the connector according to any of claims 1 to 4.

8. A method of connecting end to end two reinforced steel bars of the type which are produced with standard deformation patterns end to end, using the connector according to any of claims 1 to 4.

9. A connector for connecting a reinforced steel bar of the type which is produced with standard deformation patterns to an object, the connector comprising a gripping means which has at least one tightening means, the gripping means comprising at least a pair of grips which assemble into a hollow tube having at least two longitudinal gaps, inner circumferential surfaces of the gripping means being shaped to substantially match the profile of the circumferential surfaces of the bars and also having indented groves to substantially match the deformation patterns of the bars, whereby when the gripping means is closed on the bars, the inner circumferential surfaces of the bars, and the deformation patterns of the bars will fit inside the indented grooves of the gripping means, wherein the outer surface of the gripping means comprises at least one tapered, threaded, circular end which is engageable with a tightening nut, the inner surface of the tightening nut being tapered and threaded to match the outer surface of the gripping means whereby when the tightening nut is turned to tighten the gripping means, the tapered end of the gripping means will move towards the smaller circumferential part of the tightening nut thereby closing together the longitudinal gaps between the grips, whereby the grips are forced to contact tightly the circumferential surfaces of the bars.

10. A connector according to claim 1, wherein the grips form a hollow cylindrical tube when assembled.

11. A connector according claim 1 or 2, wherein the gripping means is in position, the
longitudinal gaps are closed or almost closed.

12. A method of connecting a reinforced steel bar the type which is produced with standard deformation patterns to a static surface, comprising using the connector of any of claims 9 to 11.

13. A connector for connecting two reinforced steel bars of the type which are produced with standard deformation patterns, the connector being for connecting the bars end to end and comprising a gripping means which has at least one tightening means. the gripping means comprising at least a pair of grips which assemble into a hollow tube having at least two longitudinal gaps, the inner circumferential surfaces of the gripping means defining a space which is larger than the cross section of connecting bars, the inner circumferential surfaces of the grips comprising a plurality of parallel grooved surfaces, the gripping means further comprising at least a pair of slit collars which shaped like hollow tubes having at least a longitudinal gap on each collar, the outer surfaces of the slit collars having a plurality of parallel grooves which match the multiple parallel grooves of the inner circumferential surfaces of the gripping means, the inner circumferential surfaces of the slit collars having indented grooves to match the deformation patterns of the bars, the slit collars being dimensioned to fit in the gaps between the inner circumferential surfaces of the gripping means and the bars, whereby the bars connected end to end can be rotated axially relative to one another, the inner circumferential surfaces of the slit collars being rotated to match the positions of the deformation patterns of the respective connecting bars, the outer surface of the gripping means comprising at least one tapered, threaded, circular end which is engageable with a tightening nut, the inner surface of the tightening nut being tapered and threaded to match the outer surface of the gripping means whereby when the tightening nut is turned to tighten the gripping means, the tapered end of the gripping means will move towards the smaller circumferential part of the tightening nut thereby closing together the longitudinal gaps between the grips, whereby the grips are forced to contact the slit collars and the slit collars are forced to contact tightly the circumferential surfaces of the bars.

14. A connector according to claim 13, wherein the grips form a hollow cylindrical tube when assembled.

15. A connector according to claim 13 or 14, wherein the gripping means is in position, the longitudinal gaps are closed or almost closed.

16. A connector according to claim 13, 14 or 15 wherein the plurality of parallel grooves on the inner circumferential surfaces of the gripping means define a plurality of grooved rings whose radii are arranged perpendicular to the axis of the gripping means.

17. A method of connecting two reinforced steel bars the type which are produced with standard deformation patterns, substantially as herein described with reference to any of figures 1, 2, 5 and 6 or as described with reference to figure 8 or as described with reference to figure 10 to 13.
